(19) Europäisches Patentamt
European Patent Office
Office européen des brevets

(11) EP 4 723 277 A1

(12) **EUROPEAN PATENT APPLICATION**
published in accordance with Art. 153(4) EPC

(43) Date of publication:
**08.04.2026 Bulletin 2026/15**

(21) Application number: **25736278.0**

(22) Date of filing: **03.01.2025**

(51) International Patent Classification (IPC):
***H01M 10/0565*** *(2010.01)* ***C08F 212/14*** *(2006.01)*
***C08F 222/10*** *(2006.01)* ***C08F 2/44*** *(2006.01)*

(52) Cooperative Patent Classification (CPC):
**C08F 2/44; C08F 212/14; C08F 222/10;**
**H01M 10/0565;** Y02E 60/10

(86) International application number:
**PCT/KR2025/000100**

(87) International publication number:
**WO 2025/147124 (10.07.2025 Gazette 2025/28)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **05.01.2024 KR 20240002097**

(71) Applicant: **LG Energy Solution, Ltd.**
**Seoul 07335 (KR)**

(72) Inventors:
- **KIM, Jiyoung**
**Daejeon 34122 (KR)**
- **KIM, Dong Kyu**
**Daejeon 34122 (KR)**
- **HAN, Hyeaeun**
**Daejeon 34122 (KR)**

(74) Representative: **BCKIP Part mbB**
**MK1**
**Landsbergerstraße 98, 3.Stock**
**80339 München (DE)**

# (54) COMPOSITE POLYMER ELECTROLYTE, METHOD FOR MANUFACTURING SAME, AND ALL-SOLID-STATE BATTERY COMPRISING SAME

(57) According to the present invention, a composite polymer electrolyte having excellent ionic conductivity as well as mechanical strength, and a method for manufacturing same can be provided. In addition, according to the present invention, the composite polymer electrolyte is particularly applied to an all-solid-state battery using lithium metal or lithium alloy as a negative electrode, thereby suppressing the generation of lithium dendrites and improving lifespan characteristics.



Processed by Luminess, 75001 PARIS (FR)

## Description

### Technical Field

This application claims the benefit of priority on the basis of Korean Patent Application No. 2024-0002097, filed on January 5, 2024, and the entire contents disclosed in the Korean Patent Application are incorporated herein as a part of the specification. The present disclosure relates to a single-ion conductive composite polymer electrolyte, a method for preparing the same and an all-solid-state battery including the same.

### Background Art

Organic liquid electrolytes commonly used in lithium-ion secondary batteries have defects such as flammability, corrosiveness, thermal instability, high-voltage instability and leakage, and may cause ignition or explosion when the battery behaves abnormally, which is problematic.

In order to solve the problems, research has been conducted to replace the organic liquid electrolyte with a more stable type, and polymer electrolytes have been proposed as an alternative.

Polymer electrolytes are a type of solid electrolyte, and may avoid the risk of electrolyte leakage or flammable gasification of the electrolyte when it behaves abnormally, and thus are more stable than liquid electrolytes. In addition, since polymer electrolytes do not cause leakage, thin, light and flexible batteries that replace hard external packaging materials may be produced, and have various advantages including high energy density, low volatility and reactivity, and thus receive attention.

However, polymer electrolytes have weak mechanical strength and low ionic conductivity, making it difficult to achieve all-solid-state batteries with excellent performance. In particular, there have been recent attempts to use a lithium metal as a negative electrode to improve energy density, but if a lithium metal is used as a negative electrode, lithium dendrites are produced to deteriorate life characteristics.

### Disclosure of Invention

### Technical Goals

The present disclosure is to provide a composite polymer electrolyte having excellent mechanical strength as well as ionic conductivity, and a method for preparing the same.

The present disclosure also aims to apply the composite polymer electrolyte as described above to an all-solid-state battery using a lithium metal or lithium alloy as a negative electrode to suppress lithium dendrite generation and improve life characteristics.

### Technical solutions

An aspect of the present disclosure relates to a composite polymer electrolyte including: a single-ion conductive polymer polymerized from a mixed solution containing a single-ion conductive monomer of Formula 1 below and a crosslinking agent; a cyclic carbonate; and inorganic particles. A molar ratio of the cyclic carbonate to lithium ions contained in the single-ion conductive polymer is 5 or more.

[Formula 1]

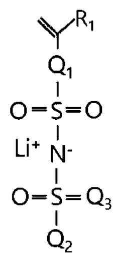

[Formula 2]

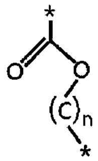

Where $Q_1$ is a $C_{6-12}$ arylene group or a functional group represented by Formula 2, where n is an integer from 1 to 10, $R_1$ is hydrogen or a $C_{1-3}$ alkyl group, $Q_2$ is a halogen group or a $C_{1-3}$ alkyl group substituted with a halogen group, and $Q_3$ is =O or =N-S(O)$_2$-$R_2$, where $R_2$ is a halogen group or a $C_{1-3}$ alkyl group substituted with a halogen group.

In an embodiment, the single-ion conductive monomer of Formula 1 may be one or more selected from the group consisting of Formulas A to E below.

[Formula A]

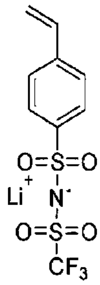

[Formula B]

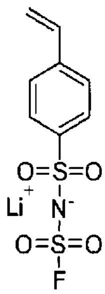

[Formula C]

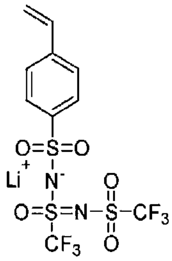

[Formula D]

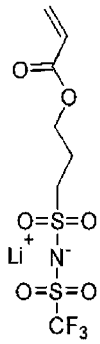

[Formula E]

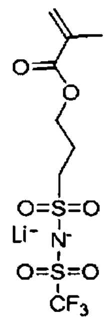

In an embodiment, the inorganic particles may be one or more types of active inorganic particles selected from the group consisting of lithium lanthanum zirconium tantalum oxide (LLZTO), lithium lanthanum zirconium oxide (LLZO), lithium lanthanum tantalum oxide (LLTaO), lithium lanthanum titanate (LLT), lithium phosphorous oxynitride (LiPON), lithium orthosilicate ($Li_4SiO_4$), lithium borate ($Li_3BO_3$), lithium aluminum germanium phosphate (LAGP), lithium aluminum titanium phosphate (LATP), lithium lanthanum zirconium niobium oxide (LLZ-Nb) and lithium orthosilicate-lithium phosphate composite ($Li_4SiO_4$-$Li_3PO_4$), or one or more types of inactive inorganic particles selected from the group consisting of zinc oxide (ZnO), silicon dioxide ($SiO_2$), aluminum oxide ($Al_2O_3$) and titanium dioxide ($TiO_2$).

In an embodiment, a particle size of the active inorganic particles may be 1.5 micrometers (μm) or less, and a particle size of the inactive inorganic particles may be 500 nanometers (nm) or less.

In an embodiment, the crosslinking agent may be one or more selected from the group consisting of polyethylene glycol diacrylate (PEGDA), polyethylene glycol dimethacrylate (PEGDMA), polyethylene glycol monoethyl ether acrylate (PEGMEA), polyethylene glycol monomethacrylate (PEGMEMA), pentaerythritol triacrylate (PETA), 1,6-hexanediol diacrylate (HDDA), trimethylolpropane triacrylate (TMPTA), trimethylolpropane trimethacrylate (TMPTMA), and ethoxylated trimethylolpropane triacrylate trimethylolpropane triacrylate (ETPTA).

In an embodiment, a number average molecular weight (Mn) of the crosslinking agent may be 100 to 10000 grams per mole (g/mol).

In an embodiment, the cyclic carbonate may be one or more selected from the group consisting of ethylene carbonate (EC), propylene carbonate (PC), butylene carbonate (BC), vinylene carbonate (VC), and γ-butyrolactone.

In an embodiment, the composite polymer electrolyte of the present disclosure may include the single-ion conductive polymer in 40 weight percentage (wt%) or less.

In an embodiment, the composite polymer electrolyte of the present disclosure may include the inorganic particles in 100 to 1000 parts by weight based on 100 parts by weight of the single-ion conductive polymer.

In an embodiment, the composite polymer electrolyte of the present disclosure may include the cyclic carbonate in 100 to 1000 parts by weight based on 100 parts by weight of the single-ion conductive polymer.

In an embodiment, the composite polymer electrolyte of the present disclosure may have ionic conductivity at 25 degrees Celsius (°C) of $1.0 \times 10^{-4}$ siemens per centimeter (S/cm) or more.

Another aspect of the present disclosure relates to a method for preparing a composite polymer electrolyte. The method includes: preparing a mixed solution containing a single-ion conductive monomer of Formula 1 below, inorganic particles, and a crosslinking agent (step S1); heating the mixed solution at a high temperature to polymerize a single-ion conductive polymer and form a film including the single-ion conductive polymer (step S2); and impregnating the film with a cyclic carbonate (step S3). A molar ratio of the cyclic carbonate to lithium ions contained in the single-ion conductive

polymer is 5 or more.

[Formula 1]

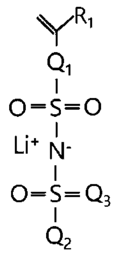

[Formula 2]

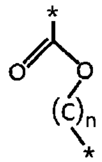

Where $Q_1$ is a $C_{6-12}$ arylene group or a functional group represented by Formula 2, where n is an integer from 1 to 10, $R_1$ is hydrogen or a $C_{1-3}$ alkyl group, $Q_2$ is a halogen group or a $C_{1-3}$ alkyl group substituted with a halogen group, and $Q_3$ is =O or =N-S(O)$_2$-$R_2$, where $R_2$ is a halogen group or a $C_{1-3}$ alkyl group substituted with a halogen group.

In an embodiment, step S2 may be performed under vacuum conditions at a temperature of 40 to 100°C for 12 to 24 hours.

Another aspect of the present disclosure relates to an all-solid-state battery including a positive electrode, a solid electrolyte membrane, and a negative electrode. The solid electrolyte membrane includes a composite polymer electrolyte. The composite polymer electrolyte includes: a single-ion conductive polymer polymerized from a mixed solution containing a single-ion conductive monomer of Formula 1 below and a crosslinking agent; a cyclic carbonate; and inorganic particles. A molar ratio of the cyclic carbonate to lithium ions contained in the single-ion conductive polymer is 5 or more.

[Formula 1]

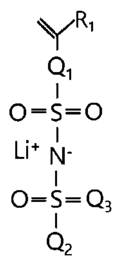

[Formula 2]

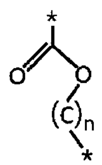

Where $Q_1$ is a $C_{6-12}$ arylene group or a functional group represented by Formula 2, where n is an integer from 1 to 10, $R_1$ is hydrogen or a $C_{1-3}$ alkyl group, $Q_2$ is a halogen group or a $C_{1-3}$ alkyl group substituted with a halogen group, and $Q_3$ is =O or =N-S(O)$_2$-$R_2$, where $R_2$ is a halogen group or a $C_{1-3}$ alkyl group substituted with a halogen group.

In an embodiment, in the all-solid-state battery of the present disclosure, a lithium metal or lithium alloy may be

used as the negative electrode.

## Effects

According to the present disclosure, a composite polymer electrolyte having excellent ionic conductivity as well as mechanical strength, and a method for preparing the same may be provided.

According to the present disclosure, the composite polymer electrolyte as described above may be applied to an all-solid-state battery using a lithium metal or lithium alloy as a negative electrode to suppress lithium dendrite generation and improve life characteristics.

## Best Mode for Carrying Out the Invention

Terms or words used in this specification and claims should not be construed as limited to their common or dictionary meanings, and it should be interpreted as meaning and concept consistent with the technical idea of the present disclosure based on the principle that the inventor may appropriately define the concept of terms in order to explain his or her invention in the best way.

Therefore, it is understood that the configuration of an embodiment described in this specification is one of the most desired embodiments of the present disclosure and does not represent the entire technical idea of the present disclosure, so various equivalents and modification examples that can replace the embodiments at the time of filing the present application may exist.

In this specification, singular expressions include plural expressions unless the context clearly indicates otherwise.

In this specification, if a part "includes" a certain element, it means that the part may further include other elements rather than excluding other elements, unless specifically stated to the contrary. Accordingly, for example, a composition including compound A may include compounds other than A. However, in certain embodiments, the term "including" also encompasses more limited meanings of "consisting essentially/inherently of" and "consisting of," and for example, "a composition including compound A" may also consist (essentially/inherently) of compound A.

In connection with this, as used in this specification, it should be understood that terms such as "being provided with" or "having" are intended to designate the presence of implemented features, numbers, operations, components, or combinations thereof, but not exclude in advance the possibility of the presence or addition of one or more other features, numbers, operations, components, or combinations thereof.

In this specification, if an arbitrary layer is located "on" or "between" another arbitrary layer(s), not only a case where such member is in contact with another layer, but also a case where another layer or substance exists between the two layers are included.

If amounts, concentrations, or other values or parameters are given as listings of ranges, desirable ranges, desirable upper limits and desirable lower limits in this specification, it is to be understood that all ranges that may be formed from any pair of any upper range limits or desirable values and any lower range limits or desirable values, are specifically disclosed, regardless of whether the range is separately disclosed. If a range of numeric values is referred to in this specification, unless otherwise stated, for example, unless there is a limited term such as greater than and less than, the range is intended to include the endpoint values and all integers and fractions within the range. The scope of the present disclosure is not intended to be limited to the specific values referred to when defining a range.

Among the physical properties referred to in this specification, in cases where a measurement temperature affects relevant physical properties, unless otherwise specified, the physical properties are measured at room temperature. The term room temperature is a natural temperature that is not heated or reduced, and may mean, for example, any temperature in a range of about 10 degrees Celsius (°C) to 30°C, about 23°C, or about 25°C. Additionally, unless otherwise specified, the unit of the temperature in this specification is °C.

In addition, among the physical properties referred to in this specification, in cases where a measurement pressure affects relevant physical properties, unless otherwise specified, the physical properties are measured at normal pressure, that is, atmospheric pressure (about 1 atm).

A first aspect of the present disclosure relates to a composite polymer electrolyte.

The composite polymer electrolyte of the present disclosure may include, for example: a single-ion conductive polymer polymerized from a mixed solution containing a single-ion conductive monomer of Formula 1 below and a crosslinking agent; a cyclic carbonate; and/or inorganic particles.

[Formula 1]

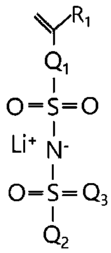

[Formula 2]

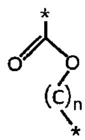

Where $Q_1$ may be a $C_{6-12}$ arylene group or a functional group represented by Formula 2, where n may be an integer from 1 to 10, $R_1$ may be hydrogen or a $C_{1-3}$ alkyl group, $Q_2$ may be a halogen group or a $C_{1-3}$ alkyl group substituted with a halogen group, and $Q_3$ may be =O or $=N-S(O)_2-R_2$, where $R_2$ may be a halogen group or a $C_{1-3}$ alkyl group substituted with a halogen group.

In the present specification, the term "arylene group" is a functional group derived from mainly benzene or a related aromatic structure. Examples of the arylene group include, but are not limited to, a phenylene group, a biphenylene group, a terphenylene group, a quaterphenylene group, a naphthalenylene group, an anthracenylene group, a phenanthrenylene group, a pyrenylene group, or a benzopyrenylene group, but are non-limiting examples and the scope of the present disclosure is not limited thereto.

In the present specification, the term "alkyl group" by itself or as a part of another substituent, means monovalent hydrocarbon of a straight or branched chain, having the indicated number of carbon atoms (that is, $C_{1-10}$ means 1 to 10 carbon atoms), unless otherwise stated.

Examples of the alkyl group include a methyl group, an ethyl group, a propyl group, an n-propyl group, an isopropyl group, a butyl group, an n-butyl group, an isobutyl group, a tert-butyl group, a sec-butyl group, a 1-methylbutyl group, a 1-ethylbutyl group, a pentyl group, an n-pentyl group, an isopentyl group, a neopentyl group, a tert-pentyl group, a hexyl group, an n-hexyl group, a 1-methylpentyl group, a 2-methylpentyl group, a 4-methyl-2-pentyl group, a 3,3-dimethylbutyl group, a 2-ethylbutyl group, a heptyl group, an n-heptyl group, a 1-methylhexyl group, a cyclopropyl group, a cyclobutyl group, a cyclopentyl group, a 3-methylcyclopentyl group, a 2,3-dimethylcyclopentyl group, a cyclohexyl group, a 3-methylcyclohexyl group, a 4-methylcyclohexyl group, a 2,3-dimethylcyclohexyl group, a 3,4,5-trimethylcyclohexyl group, a 4-tert-butylcyclohexyl group, a cycloheptyl group, a cyclooctyl group, an octyl group, an n-octyl group, a tert-octyl group, a 1-methylheptyl group, a 2-ethylhexyl group, a 2-propylpentyl group, an n-nonyl group, a 2,2-dimethylheptyl group, a 1-ethyl-propyl group, a 1,1-dimethyl-propyl group, an isohexyl group, a 2-methylpentyl group, a 4-methylhexyl group, and a 5-methylhexyl group, but are non-limiting examples and the scope of the present disclosure is not limited thereto.

In the present specification, the term "halogen" includes, but is not limited to, for example, fluoro, chloro, bromo or iodo.

$Q_1$ may be, for example, a $C_{6-12}$ arylene group or a functional group represented by Formula 2 above. In another embodiment, if $Q_1$ is a $C_{6-10}$ arylene group, a $C_{6-8}$ arylene group or a functional group represented by Formula 2 above, n may be 1 or more, 2 or more, or 9 or less, 8 or less, 7 or less, 6 or less, 5 or less or 4 or less. In terms of improving polymerization stability and mechanical strength, $Q_1$ may desirably be a phenylene group or a functional group represented by Formula 2 where n = 3.

$R_1$ may be, for example, hydrogen or a $C_{1-3}$ alkyl group. In terms of improving polymerization reactivity, $R_1$ may desirably be hydrogen or a methyl group.

$Q_2$ may be, for example, a halogen group or a $C_{1-3}$ alkyl group substituted with a halogen group. In terms of improving ionic conductivity, $Q_2$ may desirably be fluorine or $-CF_3$.

$Q_3$ may be, for example, =O or $=N-S(O)_2-R_2$. In terms of improving ionic conductivity, $Q_3$ may desirably be =O or $=N-S(O)_2-CF_3$.

The single-ion conductive monomer of Formula 1 may be one or more selected from the group consisting of Formulas A to E below.

[Formula A]

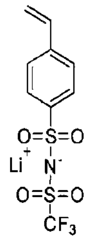

[Formula B]

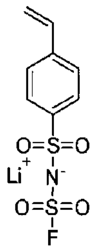

[Formula C]

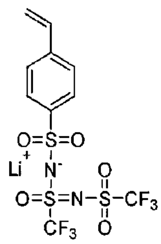

[Formula D]

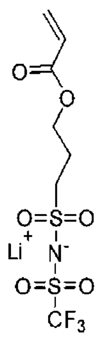

[Formula E]

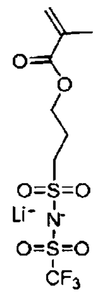

In the composite polymer electrolyte of the present disclosure, by synthesizing the single-ion conductive polymer using the single-ion conductive monomer described above, the movement of anions may be restricted so as to have high transference numbers ($t_{Li+}$) value and reduce ion concentration gradient, thereby suppressing lithium dendrites.

The crosslinking agent may be, for example, one or more selected from the group consisting of polyethylene glycol diacrylate (PEGDA), polyethylene glycol dimethacrylate (PEGDMA), polyethylene glycol monoethyl ether acrylate (PEGMEA), polyethylene glycol monomethacrylate (PEGMEMA), pentaerythritol triacrylate (PETA), 1,6-hexanediol diacrylate (HDDA), trimethylolpropane triacrylate (TMPTA), trimethylolpropane trimethacrylate (TMPTMA), and ethoxylated trimethylolpropane triacrylate trimethylolpropane triacrylate (ETPTA). From the viewpoint of easy polymerization reaction with a single-ion conductive monomer, improvement of ionic conductivity, and control of various physical properties, the crosslinking agent may desirably be polyethylene glycol diacrylate (PEGDA).

The crosslinking agent may be characterized by having, for example, a number average molecular weight (Mn) of 100 to 10,000 grams per mole (g/mol). In another embodiment, the crosslinking agent may have a number average molecular weight (Mn) of 200 g/mol or more, 300 g/mol or more, 400 g/mol or more, or 500 g/mol or more, or 9000 g/mol or less, 8000 g/mol or less, 7000 g/mol or less, 6000 g/mol or less, 5000 g/mol or less, 4000 g/mol or less, 3000 g/mol or less, 2000 g/mol or less, or 1000 g/mol or less. The present disclosure may provide a composite polymer electrolyte having excellent ionic conductivity and mechanical strength by introducing the crosslinking agent having the number average molecular weight (Mn).

The composite polymer electrolyte of the present disclosure may be characterized by including, for example, a single-ion conductive polymer polymerized from a mixed solution containing a single-ion conductive monomer of Formula 1 and a crosslinking agent as described above. The mixed solution may further include a solvent described in a second aspect described later, but the solvent may be evaporated during the polymerization process and not included in the single-ion conductive polymer, or may be included in an amount of 1 weight percentage (wt%) or less, 0.1 wt% or less, 0.01 wt% or less, or 0.001 wt% or less.

The composite polymer electrolyte of the present disclosure may include, for example, a carbonate, and the carbonate may be characterized by being a cyclic carbonate. The carbonate may be cyclic or chain-type, but if a cyclic carbonate is applied to the composite polymer electrolyte of the present disclosure, better bond with lithium ions may be achieved than the chain-type carbonate, and as a result, better ionic conductivity may be shown.

The cyclic carbonate may be characterized by being one or more selected from the group consisting of, for example, ethylene carbonate (EC), propylene carbonate (PC), butylene carbonate (BC), vinylene carbonate (VC), and γ-butyrolactone.

The composite polymer electrolyte of the present disclosure may be characterized by having, for example, a molar ratio of the cyclic carbonate to lithium ions included in the single-ion conductive polymer of 5 or more. In the present specification, the molar ratio of the cyclic carbonate to lithium ions included in the single-ion conductive polymer may be a molar ratio based on the injection amount or a value measured for the finally prepared composite polymer electrolyte. In the common technique, even though carbonate was introduced, the control of the molar ratio as described above in the finally prepared composite polymer electrolyte was difficult, because the carbonate evaporated during the preparation process of the polymer electrolyte, and there was no motivation to control the molar ratio. The inventors of the present disclosure have produced a composite polymer electrolyte without evaporation of the carbonate by assembling a battery by impregnating a film formed by polymerizing a single-ion conductive polymer by a method for preparing a composite polymer electrolyte as described later, with a cyclic carbonate, and as a result, in the final composite polymer electrolyte, the molar ratio of the cyclic carbonate to the lithium ions contained in the single-ion conductive polymer may be controlled to 5 or more. As a result, a composite polymer electrolyte which has excellent mechanical strength and excellent ionic conductivity and is suitable for use as a solid electrolyte by itself, and in particular, may be applied to an all-solid-state battery using a lithium metal or lithium alloy as a negative electrode to suppress lithium dendrite generation and improve life characteristics and performance, may be provided. In another embodiment, in the composite polymer electrolyte of the present disclosure, the molar ratio of the cyclic carbonate to the lithium ions contained in the single-ion conductive polymer may be controlled to 5.2 or more, 5.4 or more, 5.6 or more, 5.8 or more, 6.0 or more, 6.2 or more, 6.4 or more, 6.6 or more, 6.8 or more, 7.0 or more, 7.2 or more, 7.4 or more or 7.6 or more, or 50 or less, 45 or less, 40 or less, 35 or less, 30 or less, 25 or less, 20 or less,

15 or less or 10 or less.

The composite polymer electrolyte of the present disclosure may include, for example, inorganic particles. The inorganic particles may be one or more types of active inorganic particles selected from the group consisting of lithium lanthanum zirconium tantalum oxide (LLZTO; $Li_{6.75}La_3Zr_{1.75}Ta_{0.25}O_{12}$, $Li_{6.5}La_3Zr_{1.5}Ta_{0.5}O_{12}$, $Li_7La_3Zr_{2-x}Ta_xO_{12}$), lithium lanthanum zirconium oxide (LLZO; $Li_7La_3Zr_2O_{12}$), lithium lanthanum tantalum oxide (LLTaO; $Li_5La_3Ta_2O_{12}$), lithium lanthanum titanate (LLT; $Li_{0.33}La_{0.55}TiO_3$), lithium phosphorous oxynitride (LiPON; $Li_3PO_4$), lithium orthosilicate ($Li_4SiO_4$), lithium borate ($Li_3BO_3$), lithium aluminum germanium phosphate (LAGP; $Li_{1.5}Al_{0.5}Ge_{1.5}P_3O_{12}$), lithium aluminum titanium phosphate (LATP; $Li_{1.3}Al_{0.3}Ti_{1.7}P_3O_{12}$), lithium lanthanum zirconium niobium oxide (LLZ-Nb; $Li_7La_3Zr_{2-x}Nb_xO_{12}$) and lithium orthosilicate-lithium phosphate composite ($Li_4SiO_4$-$Li_3PO_4$), or one or more types of inactive inorganic particles selected from the group consisting of zinc oxide (ZnO), silicon dioxide ($SiO_2$), aluminum oxide ($Al_2O_3$) and titanium dioxide ($TiO_2$). In terms of a production cost, the inactive inorganic particles may be favorable over using the active inorganic particles.

The active inorganic particles may have, for example, a particle size of 1.5 micrometers ($\mu$m) or less. In the present specification, the particle size may be measured by a particle size analyzer (Particle Size Analyzer using Laser Diffraction, Mastersizer 3000, Malvern Pnalytical Co.) and may mean a maximum, average, and/or minimum particle size. In another embodiment, the active inorganic particles may have a particle size of 1.4 $\mu$m or less, 1.3 $\mu$m or less, 1.2 $\mu$m or less, 1.1 $\mu$m or less, or 1.0 $\mu$m or less, or 0.1 $\mu$m or more, 0.5 $\mu$m or more, or 0.8 $\mu$m or more. By controlling the particle size of the active inorganic particles as described above, sedimentation due to particle agglomeration may be suppressed and excellent dispersibility may be achieved.

The inactive inorganic particles may have, for example, a particle size of 500 nanometers (nm) or less. The inactive inorganic particles may be characterized by, in another embodiment, having a particle size of 450 nm or less, 400 nm or less, 350 nm or less, 300 nm or less, 250 nm or less, 200 nm or less, 150 nm or less, or 100 nm or less, or 10 nm or more, 20 nm or more, 30 nm or more, 40 nm or more, 50 nm or more, 60 nm or more, 70 nm or more, 80 nm or more, 90 nm or more, 100 nm or more, or 150 nm or more, or 1000 nm or less, 800 nm or less, 600 nm or less, or 400 nm or less. By controlling the particle size of the inactive inorganic particles as described above, sedimentation due to particle agglomeration may be suppressed and excellent dispersibility may be achieved.

The composite polymer electrolyte of the present disclosure may have even better ionic conductivity and mechanical strength by controlling the weight ratio of each material as follows.

The composite polymer electrolyte of the present disclosure may be characterized by, for example, containing 40 wt% or less of the single-ion conductive polymer. In another embodiment, the composite polymer electrolyte of the present disclosure may be characterized by containing 35 wt% or less, 30 wt% or less, or 25 wt% or less, or 1 wt% or more, 5 wt% or more, or 10 wt% or more of the single-ion conductive polymer. The composite polymer electrolyte of the present disclosure may have further improved ionic conductivity and mechanical strength by containing the single-ion conductive polymer in the weight range described above.

The composite polymer electrolyte of the present disclosure may be characterized by, for example, containing 60 to 90 parts by weight of the single-ion conductive monomer of Formula 1 based on 100 parts by weight of the single-ion conductive polymer. In another embodiment, the composite polymer electrolyte of the present disclosure may be characterized by containing the single-ion conductive monomer of Formula 1 in an amount of 65 parts by weight or more, 70 parts by weight or more, or 75 parts by weight or more, or 85 parts by weight or less, or 80 parts by weight or less, based on 100 parts by weight of the single-ion conductive polymer.

The composite polymer electrolyte of the present disclosure may be characterized by containing, for example, 100 to 1000 parts by weight of the inorganic particles based on 100 parts by weight of the single-ion conductive polymer. In another embodiment, the composite polymer electrolyte of the present disclosure may be characterized by containing the inorganic particles in an amount of 110 parts by weight or more, 120 parts by weight or more, 130 parts by weight or more, 140 parts by weight or more, or 150 parts by weight or more, or 900 parts by weight or less, 800 parts by weight or less, 700 parts by weight or less, 600 parts by weight or less, 500 parts by weight or less, or 400 parts by weight or less, based on 100 parts by weight of the single-ion conductive polymer.

The composite polymer electrolyte of the present disclosure may be characterized by containing, for example, 100 to 1000 parts by weight of the cyclic carbonate relative to 100 parts by weight of the single-ion conductive polymer. In another embodiment, the composite polymer electrolyte of the present disclosure may be characterized by containing the cyclic carbonate in an amount of 110 parts by weight or more, 120 parts by weight or more, 130 parts by weight or more, 140 parts by weight or more, 150 parts by weight or more, or 160 parts by weight or more, or 900 parts by weight or less, 800 parts by weight or less, 700 parts by weight or less, 600 parts by weight or less, 500 parts by weight or less, or 400 parts by weight or less, based on 100 parts by weight of the single-ion conductive polymer.

The composite polymer electrolyte of the present disclosure may be characterized by further containing, for example, other additives. Examples of the other additives include lithium salts (LiTFSI, $LiClO_4$, and $LiPF_6$), but additives commonly used in polymer electrolytes may be used without limitation as long as they do not inhibit the purpose of the present disclosure.

The composite polymer electrolyte of the present disclosure may have, for example, an ionic conductivity of 1.0 x $10^{-4}$ siemens per centimeter (S/cm) or more at 25°C through a combination of the above-described configurations. The ionic conductivity at 25°C may be measured by a method according to an evaluation example described later. The 25°C ionic conductivity of the composite polymer electrolyte of the present disclosure may be, in another embodiment, 1.2 x $10^{-4}$ S/cm or more, 1.4 x $10^{-4}$ S/cm or more, 1.6 x $10^{-4}$ S/cm or more, 1.8 x $10^{-4}$ S/cm or more, 2.0 x $10^{-4}$ S/cm or more, 2.2 x $10^{-4}$ S/cm or more, 2.4 x $10^{-4}$ S/cm or more, 2.6 x $10^{-4}$ S/cm or more, 2.8 x $10^{-4}$ S/cm or more, 3.0 x $10^{-4}$ S/cm or more, 3.5 x $10^{-4}$ S/cm or more, 4.0 x $10^{-4}$ S/cm or more, 4.5 x $10^{-4}$ S/cm or more, 5.0 x $10^{-4}$ S/cm or more, 5.5 x $10^{-4}$ S/cm or more, 6.0 x $10^{-4}$ S/cm or more, 6.5 x $10^{-4}$ S/cm or more, 7.0 x $10^{-4}$ S/cm or more, 7.5 x $10^{-4}$ S/cm or more, 8.0 x $10^{-4}$ S/cm or more, or 20.0 x $10^{-4}$ S/cm or less, 15.0 x $10^{-4}$ S/cm or less, 10.0 x $10^{-4}$ S/cm or less, 9.0 x $10^{-4}$ S/cm or less, 8.0 x $10^{-4}$ S/cm or less, 7.0 x $10^{-4}$ S/cm or less, 6.0 x $10^{-4}$ S/cm or less, 5.0 x $10^{-4}$ S/cm or less, 4.0 x $10^{-4}$ S/cm or less, 3.0 x $10^{-4}$ S/cm or less.

A second aspect of the present disclosure relates to a method for preparing a composite polymer electrolyte.

The matters relating to the first aspect of the present disclosure may be equally applied to the matters relating to the second aspect, unless otherwise specifically stated.

The method for preparing the composite polymer electrolyte of the present disclosure may include, for example, a step of preparing a mixed solution including a single-ion conductive monomer of Formula 1 below, inorganic particles, and a crosslinking agent (step S1); a step of heating the mixed solution at a high temperature to polymerize a single-ion conductive polymer and form a film including the single-ion conductive polymer (step S2); and a step of impregnating the film with a cyclic carbonate (step S3), wherein a molar ratio of the cyclic carbonate to lithium ions contained in the single-ion conductive polymer is 5 or more.

[Formula 1]

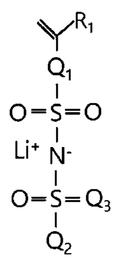

[Formula 2]

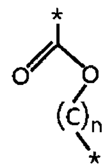

Where $Q_1$ is a $C_{6-12}$ arylene group or a functional group represented by Formula 2, where n is an integer from 1 to 10, $R_1$ is hydrogen or a $C_{1-3}$ alkyl group, $Q_2$ is a halogen group or a $C_{1-3}$ alkyl group substituted with a halogen group, and $Q_3$ is =O or =N-S(O)$_2$-$R_2$, where $R_2$ is a halogen group or a $C_{1-3}$ alkyl group substituted with a halogen group.

The solvent of step S1 may be, for example, alcohols, acetonitrile, ethers, or a mixture thereof. Examples of the alcohol include methanol, ethanol, and butanol, and examples of the ether include dimethyl ether, diethyl ether, and methyl tert-butyl ether, without limitation.

The mixed solution of step S1 may be prepared, for example, through a step of dissolving the single-ion conductive monomer in a solvent (step S1-1); a step of adding inorganic particles to the solvent and stirring (step S1-2); and a step of further adding a crosslinking agent to the solvent and stirring to prepare a mixed solution (step S1-3).

The stirring of step S1-2 may be characterized in being performed, for example, at room temperature for 15 to 21 hours. In another embodiment, the stirring of step S1-2 may be performed for 16 hours or more or 17 hours or more, or 20 hours or less or 19 hours or less, at room temperature.

The stirring of step S1-3 may be performed, for example, for 1 to 30 minutes at room temperature. In another embodiment, the stirring of step S1-3 may be characterized by being performed for 3 minutes or more, 5 minutes or more, 7 minutes or more or 9 minutes or more, or 25 minutes or less, 20 minutes or less or 15 minutes or less at room temperature.

Step S2 may be characterized by being performed, for example, for 12 to 24 hours at a temperature of 40 to 100°C under vacuum conditions. The temperature of step S2 may be, in another embodiment, 45°C or higher, 50°C or higher, or 55°C or higher, or 95°C or lower, 90°C or lower, 85°C or lower, 80°C or lower, 75°C or lower, 70°C or lower, or 65°C or lower. The performance time of step S2 may be, in another embodiment, 14 hours or more, 16 hours or more, or 17 hours or more,

or 22 hours or less, 20 hours or less, or 19 hours or less.

The method for preparing a composite polymer electrolyte of the present disclosure may further include, for example, a step of liquefying the cyclic carbonate. However, the step may be performed in case where the cyclic carbonate is in a solid state at room temperature, and in case of a liquid state, the cyclic carbonate may be used directly without the liquefying step.

A third aspect of the present disclosure relates to an all-solid-state battery.

Matters relating to the first aspect and/or second aspect of the present disclosure may be equally applied to matters relating to the third aspect unless specifically stated otherwise.

The all-solid-state battery of the present disclosure includes, for example, a positive electrode, a solid electrolyte membrane, and a negative electrode, wherein the solid electrolyte membrane includes a composite polymer electrolyte, and the composite polymer electrolyte includes: a single-ion conductive polymer polymerized from the mixed solution containing a single-ion conductive monomer of Formula 1 above and a crosslinking agent; a cyclic carbonate; and inorganic particles, and may be characterized in that the molar ratio of the cyclic carbonate to the lithium ions contained in the single-ion conductive polymer is 5 or more.

Matters relating to each of the positive electrode and negative electrode in this specification are described below as embodiments to facilitate understanding, but are not limited thereto, and matters relating to the positive electrode and negative electrode applied to known all-solid-state batteries may be equally applied.

The positive electrode includes, for example, a positive electrode current collector and a positive electrode active material layer, and the positive electrode active material layer may include a positive electrode active material, a binder, a conductive material, and/or a solid electrolyte.

The positive electrode current collector is not particularly limited as long as it is conductive and does not cause a chemical change in the battery, and may be, for example, stainless steel, aluminum, nickel, titanium, calcined carbon, or aluminum or stainless steel, surface-treated with carbon, nickel, titanium, or silver. In addition, the surface may be formed with fine irregularities to strengthen the bonding force with the positive electrode active material layer, and may be used in various forms such as a film, a sheet, a foil, a net, a porous body, a foam and a non-woven fabric.

The positive electrode active material reversibly intercalates and deintercalates lithium ions. The positive electrode active material may be, for example, lithium transition metal oxides such as lithium cobalt oxide (LCO), lithium nickel oxide, lithium nickel cobalt oxide, lithium nickel cobalt aluminum oxide (NCA), lithium nickel cobalt manganese oxide (NCM), lithium manganate and lithium iron phosphate, nickel sulfide, copper sulfide, lithium sulfide, iron oxide, or vanadium oxide, but is not limited thereto, and any positive electrode active material used in the relevant technical field may be used. The positive electrode active materials may be used alone or in combination of two or more.

The lithium transition metal oxide may be, for example, a compound represented by any one among $Li_aA_{1-b}B_bD_2$ (where $0.90 \leq a \leq 1$ and $0 \leq b \leq 0.5$); $Li_aNi_{1-b-c}Co_bB_cO_{2-\alpha}F_2$ (where $0.90 \leq a \leq 1$, $0 \leq b \leq 0.5$, $0 \leq c \leq 0.05$, and $0 < \alpha < 2$); $Li_aNi_{1-b-c}Mn_bB_cD_\alpha$ (where $0.90 \leq a \leq 1$, $0 \leq b \leq 0.5$, $0 \leq c \leq 0.05$, and $0 \leq \alpha \leq 2$); $Li_aNi_{1-b-c}Co_bB_cD_\alpha$ (where $0.90 \leq a \leq 1$, $0 \leq b \leq 0.5$, $0 \leq c \leq 0.05$, and $0 < \alpha \leq 2$); $Li_aE_{1-b}B_bO_{2-c}D_c$ (where $0.90 \leq a \leq 1$, $0 \leq b \leq 0.5$, and $0 \leq c \leq 0.05$); $LiE_{2-b}B_bO_{4-c}D_c$ (where $0 \leq b \leq 0.5$, and $0 \leq c \leq 0.05$); $Li_aNi_{1-b-c}Co_bB_cO_{2-\alpha}F_\alpha$ (where $0.90 \leq a \leq 1$, $0 \leq b \leq 0.5$, $0 \leq c \leq 0.05$, and $0 < \alpha < 2$); $Li_aCoG_bO_2$ (where $0.90 \leq a \leq 1$, and $0.001 \leq b \leq 0.1$); $Li_aMnG_bO_2$ (where $0.90 \leq a \leq 1$, and $0.001 \leq b \leq 0.1$); $Li_aMn_2G_bO_4$ (where $0.90 \leq a \leq 1$, and $0.001 \leq b \leq 0.1$); $Li_aNi_{1-b-c}Mn_bB_cO_{2-\alpha}F_\alpha$ (where $0.90 \leq a \leq 1$, $0 \leq b \leq 0.5$, $0 \leq c \leq 0.05$, and $0 < \alpha < 2$); $Li_aNi_{1-b-c}Mn_bB_cO_{2-\alpha}F_2$ (where $0.90 \leq a \leq 1$, $0 \leq b \leq 0.5$, $0 \leq c \leq 0.05$, and $0 < \alpha < 2$); $Li_aNi_bE_cG_dO_2$ (where $0.90 \leq a \leq 1$, $0 \leq b \leq 0.9$, $0 \leq c \leq 0.5$, and $0.001 \leq d \leq 0.1$.); $Li_aNi_bCo_cMn_dG_eO_2$ (where $0.90 \leq a \leq 1$, $0 \leq b \leq 0.9$, $0 \leq c \leq 0.5$, $0 \leq d \leq 0.5$, and $0.001 \leq e \leq 0.1$); $Li_aNiG_bO_2$ (where $0.90 \leq a \leq 1$, and $0.004 \leq b \leq 0.1$); $QO_2$; $QS_2$; $LiQS_2$; $V_2O_5$; $LiV_2O_5$; $LiIO_2$; $LiNiVO_4$; $Li_{(3-f)}J_2(PO_4)_3$ ($0 \leq f \leq 2$); $Li_{(3-f)}Fe_2(PO_4)_3$ ($0 \leq f \leq 2$); and $LiFePO_4$. In the compounds, A may be Ni, Co, Mn, or a combination thereof; B may be Al, Ni, Co, Mn, Cr, Fe, Mg, Sr, V, a rare earth element, or a combination thereof; D may be O, F, S, P, or a combination thereof; E may be Co, Mn, or a combination thereof; F may be F, S, P, or a combination thereof; G may be Al, Cr, Mn, Fe, Mg, La, Ce, Sr, V, or a combination thereof; Q may be Ti, Mo, Mn, or a combination thereof; I may be Cr, V, Fe, Sc, Y, or a combination thereof; J may be V, Cr, Mn, Co, Ni, Cu, or a combination thereof. A compound having a coating layer added to the surface of the compound may be used as the positive electrode active material, or a mixture of the compound and the compound having a coating layer added thereto may be used. The coating layer added to the surface of the compound may contain, for example, a lithium ion conductive oxide. Examples of the lithium ion conductive oxide include, but are not limited to, $LiNbO_3$, $Li_4Ti_5O_{12}$, and $Li_3PO_4$. The compound forming the coating layer may be amorphous or crystalline. The method of forming the coating layer may be considered, for example, spray coating and dipping, but may be selected without limitation within a range that does not adversely affect the physical properties of the positive electrode active material.

If the positive electrode active material is a ternary lithium transition metal oxide such as NCA or NCM, and contains nickel (Ni), the capacity density of the all-solid-state battery may be increased and the metal elution of the positive electrode active material in a charged state may be reduced. Accordingly, the cycle characteristics of the all-solid-state battery in the charged state may be improved.

The shape of the positive electrode active material may be, for example, particle forms such as a sphere and an elliptical sphere. The particle diameter of the positive electrode active material is not particularly limited, and may be within

a range applicable to the positive electrode active material of a common all-solid-state secondary battery. The content of the positive electrode active material of the positive electrode is also not particularly limited, and may be within a range applicable to the positive electrode of the common all-solid-state secondary battery.

The binder may be, for example, an aqueous binder, an organic binder, or a combination thereof. The binder may be, for example, polyvinyl alcohol, carboxymethyl cellulose, hydroxypropyl cellulose, diacetyl cellulose, polyvinylidene fluoride, polyvinyl chloride, carboxylated polyvinyl chloride, polyvinyl fluoride, a polymer containing ethylene oxide, polyvinyl pyrrolidone, polyurethane, polytetrafluoroethylene, polyvinylidene, fluoride, polyethylene, polypropylene, styrene-butadiene rubber, acrylated styrene-butadiene rubber, an epoxy resin, nylon, or a combination thereof. The aqueous binder may be, for example, styrene butadiene rubber, carboxymethyl cellulose, or a combination thereof. The organic binder may be, for example, polytetrafluoroethylene, polyvinylidene fluoride, or a combination thereof, but is not limited thereto, and any known binder may be used without limitation as long as it does not hinder the purpose of the present disclosure.

The conductive material may be, for example, graphite, carbon black, acetylene black, Ketjen black, carbon fiber, carbon nanotube, or metal powder, but is not limited thereto, and any conductive material that may be introduced into an all-solid-state battery may be used without limitation as long as it does not hinder the purpose of the present disclosure.

The solid electrolyte included in the positive electrode active material layer may be, for example, an organic, inorganic, or composite electrolyte. The organic electrolyte is a polymer electrolyte, and any polymer electrolyte that may be applied to an all-solid-state battery may be illustrated without limitation, and may also include a composite polymer electrolyte according to the present disclosure. The inorganic electrolyte may be a sulfide-based, oxide-based, or halide-based solid electrolyte, but any inorganic electrolyte that may be applied to an all-solid-state battery may be illustrated without limitation. The composite electrolyte may mean a composite electrolyte including a nanoparticle filler and a polymer, and any composite electrolyte that may be applied to an all-solid-state battery may be illustrated without limitation.

In addition to the positive electrode active material layer, additives such as a filler, a coating agent, a dispersant, and an ionic conductive assistant may be further included, and the additives may be used without limitation as long as they are known materials generally used in the electrode of all-solid-state batteries.

The solid electrolyte membrane may include, for example, a composite polymer electrolyte having the characteristics described above. The all-solid-state battery of the present disclosure includes the composite polymer electrolyte in the solid electrolyte membrane and may have excellent life characteristics and performance.

The solid electrolyte membrane may further include, for example, a binder. As the binder, the binder included in the positive electrode active material layer may be illustrated.

The thickness of the solid electrolyte membrane is not particularly limited, but may typically be in the range of 0.1 $\mu$m to 500 $\mu$m.

The negative electrode includes, for example, a negative electrode active material layer, and the negative electrode active material layer may include a negative electrode active material, a binder, a conductive material and/or a solid electrolyte.

The negative electrode active material may use, for example, one or two or more types selected from carbon such as non-graphitized carbon and graphite carbon; metal composite oxides such as $Li_xFe_2O_3$ ($0 \le x \le 1$), $Li_xWO_2$ ($0 \le x \le 1$), and $Sn_xMe_{1-x}Me'_yO_z$ (Me: Mn, Fe, Pb, Ge; Me'; Al, B, P, Si, elements of group 1, 2, and 3 of the periodic table, halogen; $0 \le x \le 1$; $1 \le y \le 3$; and $1 \le z \le 8$); a lithium metal; a lithium alloy; a lithium-indium alloy; a silicon-based alloy; a tin-based alloy; indium; an indium-based alloy; metal oxides such as SnO, $SnO_2$, PbO, $PbO_2$, $Pb_2O_3$, $Pb_3O_4$, $Sb_2O_3$, $Sb_2O_5$, GeO, $GeO_2$, $Bi_2O_3$, $Bi_2O_4$, and $Bi_2O_5$; conductive polymers such as polyacetylene; Li-Co-Ni-based materials; titanium oxide; and lithium titanium oxide.

The solid electrolyte, conductive material, and/or binder, included in the negative electrode active material layer may be one of the types included in the positive electrode or solid electrolyte membrane, but are not limited thereto, and any solid electrolyte, conductive material, and/or binder, used in the relevant technical field may be used. The solid electrolyte, conductive material, and/or binder included in the negative electrode active material layer may be the same as or different from the solid electrolyte, conductive material, and/or binder, included in the positive electrode active material layer and solid electrolyte membrane.

The negative electrode active material layer may also further include, for example, other additives. The additives may be used without limitation as long as they are known materials generally used in the electrode of all-solid-state batteries.

The all-solid-state battery of the present disclosure may use a lithium metal or a lithium alloy as the negative electrode, particularly from the viewpoint of improving energy density. In this way, if a lithium metal or lithium alloy is used as a negative electrode, there is a defect that lithium dendrites are generated and the life characteristics of the battery are reduced due to the formation of a non-uniform interface with the solid electrolyte and high reactivity. The present disclosure may solve the defect by making a solid electrolyte membrane include the composite polymer electrolyte as described above and/or the solid electrolyte included in the negative electrode or the positive electrode include the composite

polymer electrolyte as described above, and thus, may provide an all-solid-state battery in which the energy density, lifespan, and performance may all be improved.

The negative electrode may further include, for example, a negative electrode current collector. The negative electrode current collector may use a known metal that may be used as a current collector of an all-solid-state battery. The negative electrode current collector may use, for example, a material that does not form an alloy or compound with lithium. As the negative electrode current collector, for example, a material selected from the group consisting of copper, nickel, aluminum, vanadium, gold, platinum, magnesium, iron, titanium, cobalt, chromium, zinc, germanium, indium, and stainless steel may be used, but is not limited thereto, and any material used as an electrode current collector in the relevant technical field may be used as long as it does not hinder the purpose of the present disclosure. The negative electrode current collector may be composed of one of the above-described metals, or may be composed of an alloy or a coating material of two or more metals. The negative electrode current collector may be used in various forms, for example, a film, a sheet, a foil, a net, a porous body, a foam, and a non-woven fabric.

## Mode for Carrying Out the Invention

Hereinafter, the present disclosure will be explained in detail with reference to examples in order to specifically explain the disclosed contents of the present disclosure as described above and the intended actions and effects of the present disclosure. However, the examples may be modified into various other forms, and the scope of the present specification is not to be construed as being limited to the examples. It is emphasized that the examples represent the present disclosure and are provided to explain the present disclosure in more detail to those skilled in the art.

### Example 1.

A composite polymer electrolyte was prepared by the following method so that the weight ratio of a single-ion conductive monomer, a crosslinking agent, inorganic particles, and a cyclic carbonate included in the prepared composite polymer electrolyte was 13:4:52:31.

First, (trifluoromethane)sulfonamide lithium styrene (LiSTFSI) as a single-ion conductive monomer was dissolved in an acetonitrile solvent at a concentration of 10 wt%, and then LLZTO with an average particle diameter of 1 μm was added as inorganic particles, followed by stirring for 18 hours at room temperature using a magnetic bar. Then, PEGDA with Mn=575 g/mol as a crosslinking agent was added to the solution, and the mixture was additionally stirred for 10 minutes at room temperature, and then, the prepared mixed solution was applied to a substrate. After that, a polymer structure was formed through a crosslinking reaction in a vacuum oven at 60°C for 18 hours and a film was obtained through performing the drying process of the solvent. Next, the film was impregnated with ethylene carbonate (EC), which was liquefied by briefly placing in an oven at 35 to 40°C, as a cyclic carbonate, to obtain a composite polymer electrolyte. In this case, the ratio of the mole number of the cyclic carbonate to the mole number of Li ions contained in the single-ion conductive monomer of the prepared composite polymer electrolyte was 8.5.

### Example 2.

A composite polymer electrolyte was obtained in the same manner as in Example 1, except that the weight ratio of the single-ion conductive monomer, crosslinking agent, inorganic particles, and cyclic carbonate, included in the prepared composite polymer electrolyte was 11:3:45:41. In this case, the ratio of the mole number of the cyclic carbonate to the mole number of Li ions included in the single-ion conductive monomer of the prepared composite polymer electrolyte was 13.2.

### Example 3.

A composite polymer electrolyte was obtained in the same manner as in Example 1, except that the weight ratio of the single-ion conductive monomer, crosslinking agent, inorganic particles, and cyclic carbonate, included in the prepared composite polymer electrolyte was 10:3:38:49. In this case, the ratio of the mole number of the cyclic carbonate to the mole number of Li ions included in the single-ion conductive monomer of the prepared composite polymer electrolyte was 18.9.

### Example 4.

A composite polymer electrolyte was obtained in the same manner as in Example 1, except that ZnO having an average particle diameter of 50 nm was used instead of LLZTO having an average particle diameter of 1 μm as the inorganic particles, and that the weight ratio of the single-ion conductive monomer, crosslinking agent, inorganic particles, and cyclic carbonate, included in the prepared composite polymer electrolyte was 12:4:54:30. In this case, the ratio of the mole number of the cyclic carbonate to the mole number of Li ions included in the single-ion conductive monomer of the

prepared composite polymer electrolyte was 8.9.

**Example 5.**

A composite polymer electrolyte was obtained in the same manner as in Example 1, except that $SiO_2$ having an average particle diameter of 200 nm was used instead of LLZTO having an average particle diameter of 1 μm as the inorganic particles, and that the weight ratio of the single-ion conductive monomer, crosslinking agent, inorganic particles, and cyclic carbonate, included in the prepared composite polymer electrolyte was 18:6:37:39. In this case, the ratio of the mole number of the cyclic carbonate to the mole number of Li ions included in the single-ion conductive monomer of the prepared composite polymer electrolyte was 7.7.

**Example 6.**

A composite polymer electrolyte was obtained in the same manner as in Example 1, except that the weight ratio of the single-ion conductive monomer, crosslinking agent, inorganic particles, and cyclic carbonate, included in the prepared composite polymer electrolyte was 15:4.5:59.5:21. In this case, the ratio of the mole number of the cyclic carbonate to the mole number of Li ions contained in the single-ion conductive monomer of the prepared composite polymer electrolyte was 5.2.

**Example 7.**

A composite polymer electrolyte was obtained in the same manner as in Example 1, except that propylene carbonate (PC) was introduced instead of EC as the cyclic carbonate, and the weight ratio of the single-ion conductive monomer, crosslinking agent, inorganic particles, and cyclic carbonate, included in the prepared composite polymer electrolyte was 13:4:52:31. In this case, the ratio of the mole number of the cyclic carbonate to the mole number of Li ions contained in the single-ion conductive monomer of the prepared composite polymer electrolyte was 7.4.

**Example 8.**

A composite polymer electrolyte was obtained in the same manner as in Example 1, except that ZnO having an average particle diameter of 50 nm was used instead of LLZTO having an average particle diameter of 1 μm as the inorganic particles, and that the weight ratio of the single ion conductive monomer, crosslinking agent, inorganic particles, and cyclic carbonate, included in the prepared composite polymer electrolyte was 14.2:4.3:61.2:20.3. In this case, the ratio of the mole number of the cyclic carbonate to the mole number of Li ions included in the single-ion conductive monomer of the prepared composite polymer electrolyte was 5.2.

**Example 9.**

A composite polymer electrolyte was obtained in the same manner as in Example 1, except that $SiO_2$ having an average particle diameter of 200 nm was used instead of LLZTO having an average particle diameter of 1 μm as inorganic particles, and that the weight ratio of the single-ion conductive monomer, crosslinking agent, inorganic particles, and cyclic carbonate, included in the prepared composite polymer electrolyte was 21:6.5:43:29.5. In this case, the ratio of the mole number of the cyclic carbonate to the mole number of Li ions included in the single-ion conductive monomer of the prepared composite polymer electrolyte was 5.

**Comparative Example 1.**

A composite polymer electrolyte was obtained in the same manner as in Example 1, except that the cyclic carbonate was not introduced, and the weight ratio of the single-ion conductive monomer, crosslinking agent, and inorganic particles, included in the prepared composite polymer electrolyte was 19:6:75. In this case, the ratio of the mole number of the cyclic carbonate to the mole number of Li ions included in the single-ion conductive monomer of the prepared composite polymer electrolyte was 0.

**Comparative Example 2.**

A composite polymer electrolyte was obtained in the same manner as in Example 1, except that ethyl methyl carbonate (EMC) was introduced as a chain carbonate instead of the cyclic carbonate, and the weight ratio of the single-ion conductive monomer, crosslinking agent, inorganic particles, and chain carbonate, included in the prepared composite

polymer electrolyte was 13:4:54:29. In this case, the ratio of the mole number of the chain carbonate to the mole number of Li ions contained in the single-ion conductive monomer of the prepared composite polymer electrolyte was 6.6.

**Comparative Example 3.**

A composite polymer electrolyte was obtained in the same manner as in Example 1, except that propylene carbonate (PC) was introduced instead of EC as the cyclic carbonate, and the weight ratio of the single-ion conductive monomer, crosslinking agent, inorganic particles, and cyclic carbonate, included in the prepared composite polymer electrolyte was 17:5:67:11. In this case, the ratio of the mole number of the cyclic carbonate to the mole number of Li ions contained in the single-ion conductive monomer of the prepared composite polymer electrolyte was 2.

**Comparative Example 4.**

A composite polymer electrolyte was obtained in the same manner as in Example 1, except that $SiO_2$ having an average particle diameter of 200 nm was used instead of LLZTO having an average particle diameter of 1 μm as the inorganic particles, and that the weight ratio of the single-ion conductive monomer, crosslinking agent, inorganic particles, and cyclic carbonate, included in the prepared composite polymer electrolyte was 27.5:8:55:9.5. In this case, the ratio of the mole number of the cyclic carbonate to the mole number of Li ions included in the single-ion conductive monomer of the prepared composite polymer electrolyte was 1.2.

**Comparative Example 5.**

A composite polymer electrolyte was obtained in the same manner as in Example 1, except that $SiO_2$ having an average particle diameter of 200 nm was used instead of LLZTO having an average particle diameter of 1 μm as the inorganic particles, and that the weight ratio of the single-ion conductive monomer, crosslinking agent, inorganic particles, and cyclic carbonate, included in the prepared composite polymer electrolyte was 24:7:48.5:20.5. In this case, the ratio of the mole number of the cyclic carbonate to the mole number of Li ions included in the single-ion conductive monomer of the prepared composite polymer electrolyte was 3.1.

**Comparative Example 6.**

A composite polymer electrolyte was obtained in the same manner as in Example 1, except that the inorganic particles were not introduced and the weight ratio of the single-ion conductive monomer, crosslinking agent, and cyclic carbonate, included in the prepared composite polymer electrolyte was 51.3:15.4:33.3. In this case, the ratio of the mole number of the cyclic carbonate to the mole number of Li ions contained in the single-ion conductive monomer of the prepared composite polymer electrolyte was 2.4.

**Evaluation Example. Ionic Conductivity**

In order to measure the ionic conductivity of the composite polymer electrolyte, the composite polymer electrolyte was formed on a lower plate of a 2032 type coin cell, and a SUS disc with a diameter of 1.6 centimeters (cm) was used as an inactive electrode (blocking electrode) to manufacture a coin cell with a symmetrical structure of SUS/composite polymer electrolyte/SUS. Using an electrochemical impedance spectrometer (EIS, VM3, Bio Logic Science Instrument), the resistance was measured at 25°C with an amplitude of 10 mV and a frequency of 1 Hz to 0.1 MHz scan range, and then the ionic conductivity of the composite polymer electrolyte was calculated using Equation 1 below.

[Equation 1]

$$\sigma_i = L/(RA)$$

In Equation 1 above, σi is the ionic conductivity (S $cm^{-1}$) of the composite polymer electrolyte, R is the resistance (Ω) of the composite polymer electrolyte, measured by the electrochemical impedance spectrometer, L is the thickness (cm) of the composite polymer electrolyte, and A means the measurement area (square centimeters: $cm^2$) of the composite polymer electrolyte.

As a result, the ionic conductivity of the composite polymer electrolytes of the Examples and Comparative Examples was confirmed as shown in Table 1 below.

[Table 1]

| Division | Ionic conductivity (S $cm^{-1}$) |
|---|---|
| Example 1 | $4.8 \times 10^{-4}$ |
| Example 2 | $7.2 \times 10^{-4}$ |
| Example 3 | $8.3 \times 10^{-4}$ |
| Example 4 | $2.9 \times 10^{-4}$ |
| Example 5 | $2.4 \times 10^{-4}$ |
| Example 6 | $1.6 \times 10^{-4}$ |
| Example 7 | $4.3 \times 10^{-4}$ |
| Example 8 | $1.0 \times 10^{-4}$ |
| Example 9 | $1.5 \times 10^{-4}$ |
| Comparative Example 1 | $1.2 \times 10^{-9}$ |
| Comparative Example 2 | $1.2 \times 10^{-8}$ |
| Comparative Example 3 | $8.9 \times 10^{-6}$ |
| Comparative Example 4 | $8.1 \times 10^{-7}$ |
| Comparative Example 5 | $1.3 \times 10^{-5}$ |
| Comparative Example 6 | $1.5 \times 10^{-6}$ |

## Claims

**1.** A composite polymer electrolyte comprising: a single-ion conductive polymer polymerized from a mixed solution comprising a single-ion conductive monomer of the following Formula 1 and a crosslinking agent; a cyclic carbonate; and inorganic particles, wherein

a molar ratio of the cyclic carbonate to lithium ions comprised in the single-ion conductive polymer is 5 or more:

[Formula 1]

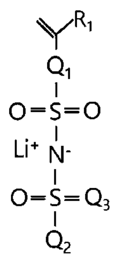

[Formula 2]

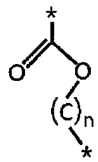

where
$Q_1$ is a $C_{6-12}$ arylene group or a functional group represented by Formula 2, where n is an integer from 1 to 10,
$R_1$ is hydrogen or a $C_{1-3}$ alkyl group,
$Q_2$ is a halogen group or a $C_{1-3}$ alkyl group substituted with a halogen group, and

$Q_3$ is =O or =N-S(O)$_2$-$R_2$, where $R_2$ is a halogen group or a $C_{1-3}$ alkyl group substituted with a halogen group.

2. The composite polymer electrolyte according to claim 1, wherein the single-ion conductive monomer of Formula 1 is one or more selected from the group consisting of the following Formulas A to E:

[Formula A]

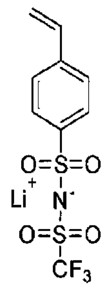

[Formula B]

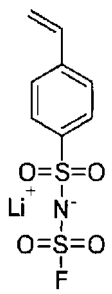

[Formula C]

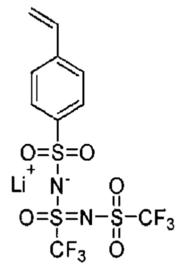

[Formula D]

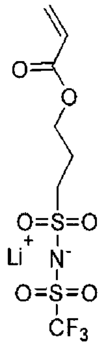

[Formula E]

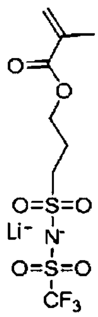

3. The composite polymer electrolyte according to claim 1, wherein the inorganic particles the inorganic particles are one or more types of active inorganic particles selected from the group consisting of lithium lanthanum zirconium tantalum oxide (LLZTO), lithium lanthanum zirconium oxide (LLZO), lithium lanthanum tantalum oxide (LLTaO), lithium lanthanum titanate (LLT), lithium phosphorous oxynitride (LiPON), lithium orthosilicate ($Li_4SiO_4$), lithium borate ($Li_3BO_3$), lithium aluminum germanium phosphate (LAGP), lithium aluminum titanium phosphate (LATP), lithium lanthanum zirconium niobium oxide (LLZ-Nb) and lithium orthosilicate-lithium phosphate composite ($Li_4SiO_4$-$Li_3PO_4$), or one or more types of inactive inorganic particles selected from the group consisting of zinc oxide (ZnO), silicon dioxide ($SiO_2$), aluminum oxide ($Al_2O_3$) and titanium dioxide ($TiO_2$).

4. The composite polymer electrolyte according to claim 3, wherein a particle size of the active inorganic particles is 1.5 micrometers (μm) or less, and a particle size of the inactive inorganic particles is 500 nanometers (nm) or less.

5. The composite polymer electrolyte according to claim 1, wherein the crosslinking agent is one or more selected from the group consisting of polyethylene glycol diacrylate (PEGDA), polyethylene glycol dimethacrylate (PEGDMA), polyethylene glycol monoethyl ether acrylate (PEGMEA), polyethylene glycol monomethacrylate (PEGMEMA), pentaerythritol triacrylate (PETA), 1,6-hexanediol diacrylate (HDDA), trimethylolpropane triacrylate (TMPTA), trimethylolpropane trimethacrylate (TMPTMA), and ethoxylated trimethylolpropane triacrylate trimethylolpropane triacrylate (ETPTA).

6. The composite polymer electrolyte according to claim 5, wherein a number average molecular weight (Mn) of the crosslinking agent is 100 to 10000 grams per mole (g/mol).

7. The composite polymer electrolyte according to claim 1, wherein the cyclic carbonate is one or more selected from the group consisting of ethylene carbonate (EC), propylene carbonate (PC), butylene carbonate (BC), vinylene carbonate (VC), and γ-butyrolactone.

8. The composite polymer electrolyte according to claim 1, wherein the single-ion conductive polymer is included in an amount of 40 weight percentage (wt%) or less.

9. The composite polymer electrolyte according to claim 1, wherein the inorganic particles are included in an amount of 100 to 1000 parts by weight based on 100 parts by weight of the single-ion conductive polymer.

**10.** The composite polymer electrolyte according to claim 1, wherein the cyclic carbonate is included in an amount of 100 to 1000 parts by weight based on 100 parts by weight of the single-ion conductive polymer.

**11.** The composite polymer electrolyte according to claim 1, having ionic conductivity at 25 degrees Celsius (°C) of 1.0 x $10^{-4}$ siemens per centimeter (S/cm) or more.

**12.** A method for preparing a composite polymer electrolyte, the method comprising:

preparing a mixed solution comprising a single-ion conductive monomer of the following Formula 1, inorganic particles, and a crosslinking agent (step S1);
heating the mixed solution at a high temperature to polymerize a single-ion conductive polymer and form a film comprising the single-ion conductive polymer (step S2); and
impregnating the film with a cyclic carbonate (step S3),
wherein a molar ratio of the cyclic carbonate to lithium ions comprised in the single-ion conductive polymer is 5 or more:

[Formula 1]

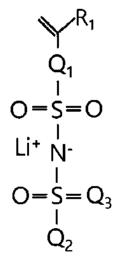

[Formula 2]

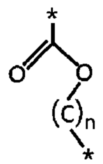

where
$Q_1$ is a $C_{6-12}$ arylene group or a functional group represented by Formula 2, where n is an integer from 1 to 10,
$R_1$ is hydrogen or a $C_{1-3}$ alkyl group,
$Q_2$ is a halogen group or a $C_{1-3}$ alkyl group substituted with a halogen group, and
$Q_3$ is =O or =N-S(O)$_2$-$R_2$, where $R_2$ is a halogen group or a $C_{1-3}$ alkyl group substituted with a halogen group.

**13.** The method for preparing a composite polymer electrolyte according to claim 12, wherein step S2 is performed under vacuum conditions at a temperature of 40 to 100°C for 12 to 24 hours..

**14.** An all-solid-state battery comprising a positive electrode, a solid electrolyte membrane, and a negative electrode,

wherein the solid electrolyte membrane comprises a composite polymer electrolyte,
the composite polymer electrolyte comprises: a single-ion conductive polymer polymerized from a mixed solution comprising a single-ion conductive monomer of the following Formula 1 and a crosslinking agent; a cyclic carbonate; and inorganic particles, and
a molar ratio of the cyclic carbonate to lithium ions comprised in the single-ion conductive polymer is 5 or more:

[Formula 1]

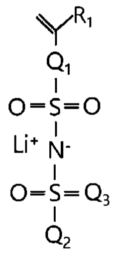

[Formula 2]

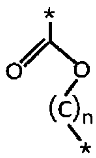

where
$Q_1$ is a $C_{6-12}$ arylene group or a functional group represented by Formula 2, where n is an integer from 1 to 10,
$R_1$ is hydrogen or a $C_{1-3}$ alkyl group,
$Q_2$ is a halogen group or a $C_{1-3}$ alkyl group substituted with a halogen group, and
$Q_3$ is =O or =N-S(O)$_2$-$R_2$, where $R_2$ is a halogen group or a $C_{1-3}$ alkyl group substituted with a halogen group.

**15.** The all-solid-state battery according to claim 14, wherein a lithium metal or lithium alloy is used as the negative electrode.

## INTERNATIONAL SEARCH REPORT

International application No. **PCT/KR2025/000100**

**A. CLASSIFICATION OF SUBJECT MATTER**

**H01M 10/0565**(2010.01)i; **C08F 212/14**(2006.01)i; **C08F 222/10**(2006.01)i; **C08F 2/44**(2006.01)i

According to International Patent Classification (IPC) or to both national classification and IPC

**B. FIELDS SEARCHED**

Minimum documentation searched (classification system followed by classification symbols)

H01M 10/0565(2010.01); H01M 10/052(2010.01); H01M 10/058(2010.01); H01M 4/134(2010.01); H01M 4/1395(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus) & keywords: 단이온 전도성 단량체(single-ion conductive monomer), 가교결합제(cross-linking agent), 무기 입자(inorganic particle), 환형 카보네이트(cyclic carbonate), 함침(impregnation), 복합 고분자 전해질(hybrid polymer electrolyte), 전고체 전지(all-solid state battery)

**C. DOCUMENTS CONSIDERED TO BE RELEVANT**

| Category* | Citation of document, with indication, where appropriate, of the relevant passages | Relevant to claim No. |
|---|---|---|
| A | LECHARTIER, M. et al. Single-ion polymer/LLZO hybrid electrolytes with high lithium conductivity. Mater. Adv. 2022, vol. 3, pp. 1139-1151. See abstract; General procedure for the synthesis of the hybrid crosslinked polymer electrolytes; table 1; and figure 1. | 1-15 |
| A | KR 10-2023-0121540 A (KOREA ADVANCED INSTITUTE OF SCIENCE AND TECHNOLOGY) 18 August 2023 (2023-08-18) See claims 1-18; and example 4. | 1-15 |
| A | KR 10-2021-0092928 A (KOREA ADVANCED INSTITUTE OF SCIENCE AND TECHNOLOGY) 27 July 2021 (2021-07-27) See claims 1-3, 8, 10 and 11; paragraphs [0071], [0075] and [0101]; and figure 1(b). | 1-15 |
| A | KR 10-0496642 B1 (ELECTRONICS AND TELECOMMUNICATIONS RESEARCH INSTITUTE) 20 June 2005 (2005-06-20) See claims 1-14; and example 1. | 1-15 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **08 April 2025** | **08 April 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.
**PCT/KR2025/000100**

**C. DOCUMENTS CONSIDERED TO BE RELEVANT**

| Category* | Citation of document, with indication, where appropriate, of the relevant passages | Relevant to claim No. |
|---|---|---|
| A | CN 114665149 A (HENGFEN GUANGZHOU GAOKE POWER ENERGY CO., LTD.) 24 June 2022 (2022-06-24)<br>See claims 1-9; and example 1. | 1-15 |

Form PCT/ISA/210 (second sheet) (July 2022)

**INTERNATIONAL SEARCH REPORT**
**Information on patent family members**

International application No.
**PCT/KR2025/000100**

| Patent document cited in search report | Publication date (day/month/year) | Patent family member(s) | Publication date (day/month/year) |
|---|---|---|---|
| KR 10-2023-0121540 A | 18 August 2023 | WO 2023-153766 A1 | 17 August 2023 |
| KR 10-2021-0092928 A | 27 July 2021 | KR 10-2419600 B1 | 12 July 2022 |
| KR 10-0496642 B1 | 20 June 2005 | CN 100306644 C | 21 March 2007 |
| | | CN 100610170 A | 27 April 2005 |
| | | JP 2004-327423 A | 18 November 2004 |
| | | JP 4249607 B2 | 02 April 2009 |
| | | KR 10-2004-0092189 A | 03 November 2004 |
| | | US 2004-0214089 A1 | 28 October 2004 |
| | | US 7211352 B2 | 01 May 2007 |
| CN 114665149 A | 24 June 2022 | None | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 20240002097